(19) **Europäisches Patentamt**

**European Patent Office**

**Office européen des brevets**

(11) **EP 1 519 184 A1**

(12) **EUROPEAN PATENT APPLICATION**
published in accordance with Art. 158(3) EPC

(43) Date of publication:
**30.03.2005 Bulletin 2005/13**

(51) Int Cl.⁷: **G01M 17/007**, B62D 17/00, G01B 21/26

(21) Application number: **03725828.2**

(22) Date of filing: **19.05.2003**

(86) International application number:
**PCT/JP2003/006199**

(87) International publication number:
**WO 2004/001365 (31.12.2003 Gazette 2004/01)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **19.06.2002 JP 2002179038**
**19.06.2002 JP 2002179039**

(71) Applicant: **Honda Giken Kogyo Kabushiki Kaisha**
**Minato-ku, Tokyo 107-8556 (JP)**

(72) Inventors:
• **OSADA, Atsushi**
**c/o HONDA ENGINEERING CO., LTD.**
**Sayama-shi, Saitama 350-1381 (JP)**

• **IWANA, Nobuyuki**
**c/o HONDA ENGINEERING CO., LTD.**
**Sayama-shi, Saitama 350-1381 (JP)**
• **MIYAZAKI, Akira**
**c/o HONDA ENGINEERING CO., LTD.**
**Sayama-shi, Saitama 350-1381 (JP)**

(74) Representative: **Melzer, Wolfgang, Dipl.-Ing.**
**Patentanwälte**
**Mitscherlich & Partner,**
**Sonnenstrasse 33 a**
**80331 München (DE)**

(54) **DEVICE AND METHOD FOR MEASURING POSITION OF WHEEL INCLINATION ANGLE ADJUSTMENT MEMBER, SHAFT-LIKE WORK ADJUSTER, AND SHAFT-LIKE WORK SETTING METHOD**

(57) An apparatus for detecting a position of a wheel tilting angle adjustment member, which can detect the position of the wheel tilting angle adjustment member in accordance with irregularity in a position of the wheel tilting angle adjustment member caused by the irregularity in an entry position of each vehicle or difference in a relative position of the wheel tilting angle adjustment member with respect to the wheel of each vehicle type without visual observation by an operator, is to be provided. A horizontal direction position of the table 3 is detected by table position detection means 5a and 5b while a wheel 2 mounted on a vehicle W is seated on a table 3 which is freely floated in an arbitrarily horizontal direction, and the position of a wheel tilting angle adjustment member A coupled to the wheel 2 is calculated on the basis of the detection result and relative position information on the wheel tilting angle adjustment member A with respect to the wheel 2, which is stored in storage means ROM.

FIG.12

**Description**

TECHNICAL FIELD

The present invention relates to an apparatus and method for detecting a position of a wheel tilting angle adjustment member which adjusts a tilting angle of a wheel, an axle-shaped work adjustment apparatus which adjusts an axle-shaped work by using an open-end wrench which includes a rotating unit engaged with the axle-shaped work, such as the wheel tilting angle adjustment member at a front end of the open-end wrench, and an axle-shaped work setting method for setting the axle-shaped work in the open-end wrench.

BACKGROUND ART

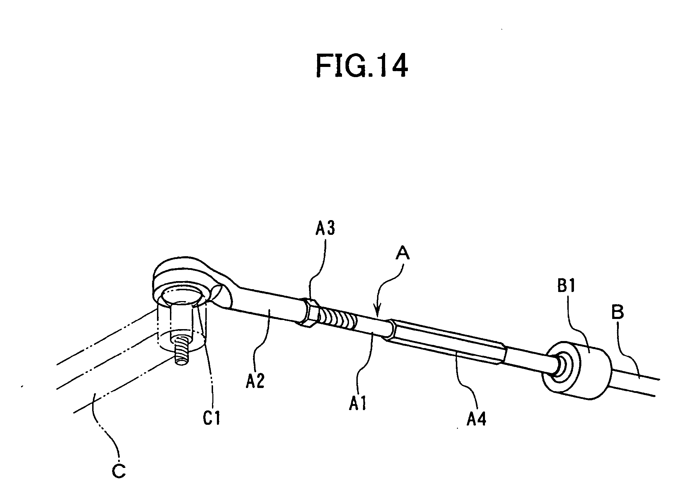

In the conventional art, when the tilting angle of the wheel, e.g. a toe angle of the wheel is adjusted, a vehicle is caused to make an entry into an adjustment station to seat the wheel on a floating table, and a length of a tie rod which is a wheel tilting angle adjustment member coupled to the wheel is adjusted with a tie-rod adjustment apparatus including an open-end wrench having a rotating unit at the front end (For example, Japanese Patent Application Laid-Open No. 2000-289640).
Specifically, as shown in Fig. 14, a tie rod A includes a rod main body A1 which is coupled to a relay rod B interlocking with a steering wheel through a ball joint B1 and a rod end A2 which is coupled to a steering knuckle arm C, in which the wheel is journaled, through a ball joint C1. The tie rod A is whirl-stopped by a locknut A3 while an end portion of the rod main body A1 is screwed in the rod end A2. A tool engagement portion A4 which is engaged with the open-end wrench of the tie-rod adjustment apparatus is formed in the rod main body A1. The length of the tie rod A is adjusted by rotating the tool engagement portion A4 with the rotating unit of the open-end wrench to change an engagement depth of the rod main body A1 with respect to the rod end A2, thereby performing the toe adjustment of the wheel.
The tie-rod adjustment apparatus includes the open-end wrench which has the rotating unit at an front end, a support mechanism which supports the open-end wrench while the open-end wrench is freely moved in vehicle-width and vehicle-length directions of an automobile, freely tilted in the vehicle-width direction, and freely rotated about an axial line in a longitudinal direction of the open-end wrench, and a carriage which elevates the support mechanism and the open-end wrench from a lower portion of the automobile stopped at a home position of an adjustment station or the like toward the tie rod. When the tie rod is adjusted with the tie-rod adjustment apparatus, at first an operator gets under the vehicle to visually observe the tie rod, and the operator moves the open-end wrench in the vehicle-width and vehicle-length directions in accordance with a position of the tie rod by utilizing action of the support mechanism. Further, the operator tilts the open-end wrench in the vehicle-width direction in accordance with the inclination in a vertical direction of the tie rod while rotating the open-end wrench about an axial line in the longitudinal direction of the open-end wrench in accordance with the inclination in a vehicle-length direction of the tie rod. Thus, the rotating unit at the front end of the open-end wrench is engaged with the tie rod so that the rotating axial line of the rotating unit is caused to coincide with the axial line of the tie rod. Then, the tie rod is rotated by the rotation of the rotating unit to thereby adjust the length of the tie rod.

DISCLOSURE OF INVENTION

When the open-end wrench of the conventional tie-rod adjustment apparatus is engaged with the tool engagement portion A4 of the tie rod A, in order to deal with irregularity in a position of the tie rod A caused by the irregularity in an entry position of each vehicle or difference in a relative position of the tie rod A with respect to the wheel of each vehicle type, the operator gets under the vehicle to visually observe the tie rod A, and the operator manually moves the open-end wrench in the vehicle-width and vehicle-length directions in accordance with a position of the tie rod A to thereby perform position adjustment. However, this position adjustment work compels the operator to keep posture of the visual observation in the upward direction for a long time, so that physical burden imposed on the operator is very large. Therefore, fully automated position adjustment work is strongly demanded. To this end, means for detecting the position of the wheel tilting angle adjustment member, such as the tie rod A is required instead of the visual observation by the operator.
In the conventional tie-rod adjustment apparatus mentioned above, when the open-end wrench is engaged with the tie rod, sometimes the rotating axial line of the rotating unit at the front end of the open-end wrench does not coincide accurately with the axial line of the tie rod, because the operator decides whether the engagement state is right or wrong by visually observing the engagement portion. Therefore, there is a problem that overload is applied to the rotating unit for rotating the tie rod depending upon the engagement between the open-end wrench and the tie rod.
In view of the foregoing, a first task of the present invention is to provide an apparatus and method for detecting a position of a wheel tilting angle adjustment member, which can detect the position of the wheel tilting angle adjustment member in accordance with the irregularity in a position of the wheel tilting angle adjustment member caused by the irregularity in an entry position of each vehicle or the difference in a relative position of the wheel tilting angle adjustment member with respect to the wheel of each vehicle type without visual observation by an operator.

A second task of the present invention is to provide an axle-shaped work adjustment apparatus and an axle-shaped work setting method, which can cause the rotating axial line of the rotating unit at the front end of the open-end wrench to coincide accurately with the axial line of the axle-shaped work without the visual observation by the operator, when the open-end wrench is engaged with the axle-shaped work, such as a tie rod.

In order to attain the first task, the present invention is characterized by including a table on which a wheel mounted on a vehicle is seated through a wheel tilting angle adjustment member for adjusting a tilting angle of the wheel, the table being freely floated in an arbitrary horizontal direction, table position detection means for detecting a position in a horizontal direction of the table, and adjusting member position calculating means for calculating the position of the wheel tilting angle adjustment member coupled to the wheel seated on the table on the basis of the detected position in the horizontal direction of the table.

In accordance with the present invention, even when irregularity in an entry position is generated in each vehicle, the horizontal direction position of the table on which the wheel of the entry vehicle is seated is detected by the table position detection means, and the position of the wheel tilting angle adjustment member is calculated on the basis of the detection result, so that the position of the wheel tilting angle adjustment member can be detected without visual observation by the operator.

In this case, it is also possible to include storage means in which relative position information on the wheel tilting angle adjustment member with respect to the wheel is stored, the relative position information being previously set for each vehicle type, wherein the adjusting member position calculating means calculates the position in the horizontal direction of the wheel seated on the table from the position in the horizontal direction of the table which is detected by the table position detection sensor, and the adjusting member position calculating means calculates the position of the wheel tilting angle adjustment member on the basis of the calculated position in the horizontal direction of the wheel and the relative position information stored in the storage means. Alternatively, it is also possible to include storage means in which relative position information on the wheel tilting angle adjustment member with respect to the wheel in a state in which the wheel is seated on the table is stored, the relative position information being previously set in each vehicle type, wherein the adjusting member position calculating means calculates the position of the wheel tilting angle adjustment member on the basis of the position in the horizontal direction of the table which is detected by the table position detection means and the relative position information stored in the storage means. In accordance with the present invention, the position of the wheel tilting angle adjustment member can be detected in accordance with difference in a relative position of the wheel tilting angle adjustment member with respect to the wheel in each vehicle type by storing the relative position information on the vehicle making an entry onto the table in the storage means. Further, it is preferred that the pieces of relative position information are stored in the storage means corresponding to a plurality of vehicle types respectively, and the adjusting member position calculating means calculates the position of the wheel tilting angle adjustment member on the basis of the relative position information in accordance with the vehicle type on the table.

In order to attain the second task, the present invention is characterized by including an open-end wrench which has an insertion groove into which an axle-shaped work is inserted in a radial direction at a front end portion, a part of or the whole of the insertion groove being formed by an engagement groove engaged with a tool engagement portion of the axle-shaped work which is formed in a rotating member journaled in the front end portion while freely rotated, the open-end wrench normally and reversely rotating the axle-shaped work by normally and reversely rotating the rotating member while the tool engagement portion is engaged with the engagement groove, detection means for detecting whether or not the objects are present near both ends of a bottom surface of the insertion groove, respectively, a drive mechanism which can drive the open-end wrench so that an angle of a rotating axial line of the rotating unit of the open-end wrench is changed with respect to an axial line of the axle-shaped work while the axle-shaped work is inserted in the insertion groove, and drive mechanism controlling means for controlling the drive mechanism to cause the rotating axial line of the rotating unit to coincide with the axial line of the axle-shaped work so that the detection means detects the presence of the axle-shaped work near both the ends of the bottom surface of the insertion groove when the axle-shaped work is inserted into the insertion groove.

In the present invention, when the axle-shaped work is inserted in the insertion groove, the detection means detects whether or not the object, i.e. the axle-shaped work is present on both the ends of the bottom portion of the insertion groove in the open-end wrench. When the axle-shaped work is not present on one of the both ends, the drive mechanism controlling means controls the drive mechanism to change the angle of the rotating axial line of the rotating unit in the open-end wrench with respect to the axial line of the axle-shaped work, and the axle-shaped work is configured to be detected on both the ends. Therefore, the state in which the axle-shaped work is detected on both the ends, i.e. the state in which the rotating axial line of the rotating unit of the open-end wrench coincides with the axial line of the axle-shaped work is obtained. Consequently, the rotating axial line of the rotating unit at the front end of the open-end wrench can be caused to coincide accurately with the axial line of the axle-shaped work without visual observation by the operator.

It is also possible that the drive mechanism is configured to be capable of rotating the open-end wrench about the axial line in a longitudinal direction of the open-end wrench and be capable of tilting the open-end wrench in a predetermined direction.

BRIEF DESCRIPTION OF DRAWINGS

Fig. 1 a plan view showing a configuration of an embodiment of the present invention;
Fig. 2 is a perspective view showing a table and a vehicle;
Fig. 3 is a front sectional view of the table;
Fig. 4 is a side view of the table;
Fig. 5 is a perspective view of a tie-rod adjustment apparatus;
Fig. 6 is an enlarged sectional view of an open-end wrench;
Fig. 7 is a left side view of Fig. 6;
Fig. 8 is a right side view of Fig. 6;
Fig. 9 is an enlarged sectional view taken on line IX-IX of Fig. 6;
Fig. 10 is an enlarged sectional view taken on line X-X of Fig. 6;
Fig. 11 is an enlarged perspective view of a support mechanism;
Fig. 12 is a view showing an X-Y coordinate system of an adjustment station 1;
Fig. 13 is a view showing a tilting control of the open-end wrench; and
Fig. 14 is a perspective view of the wrench.

BEST MODE FOR CARRYING OUT THE INVENTION

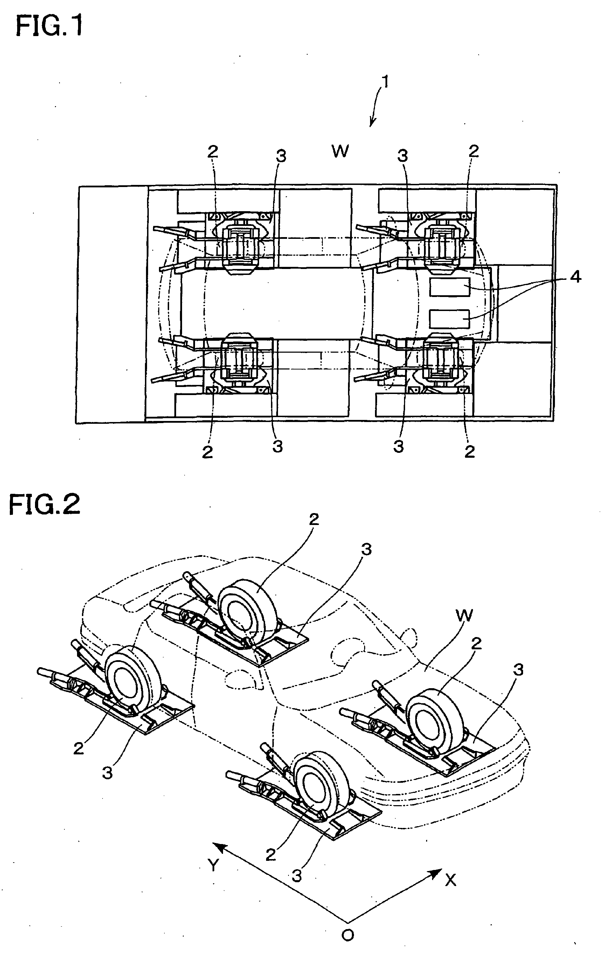

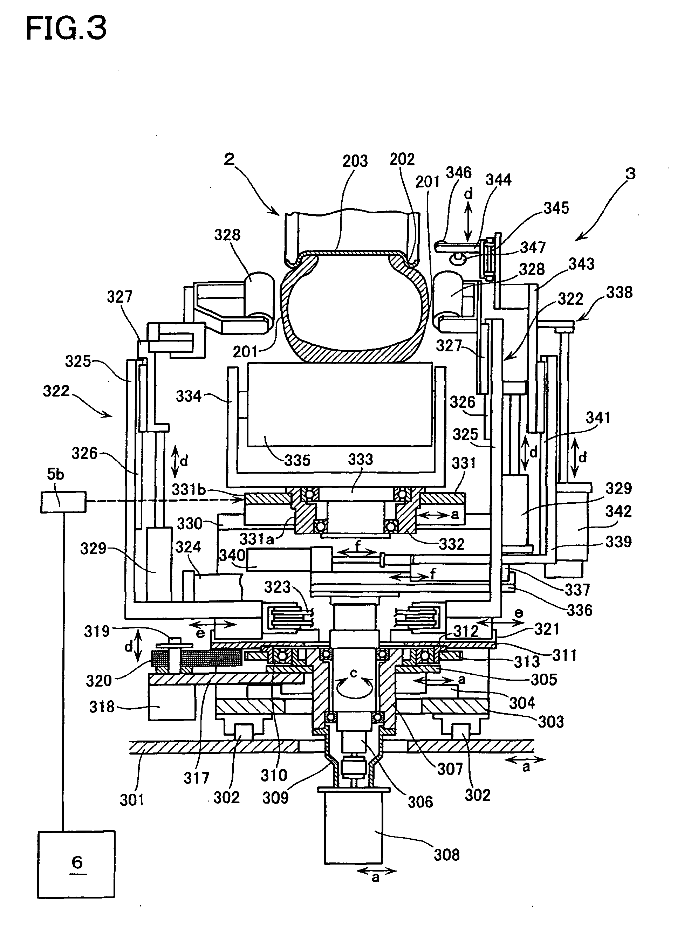

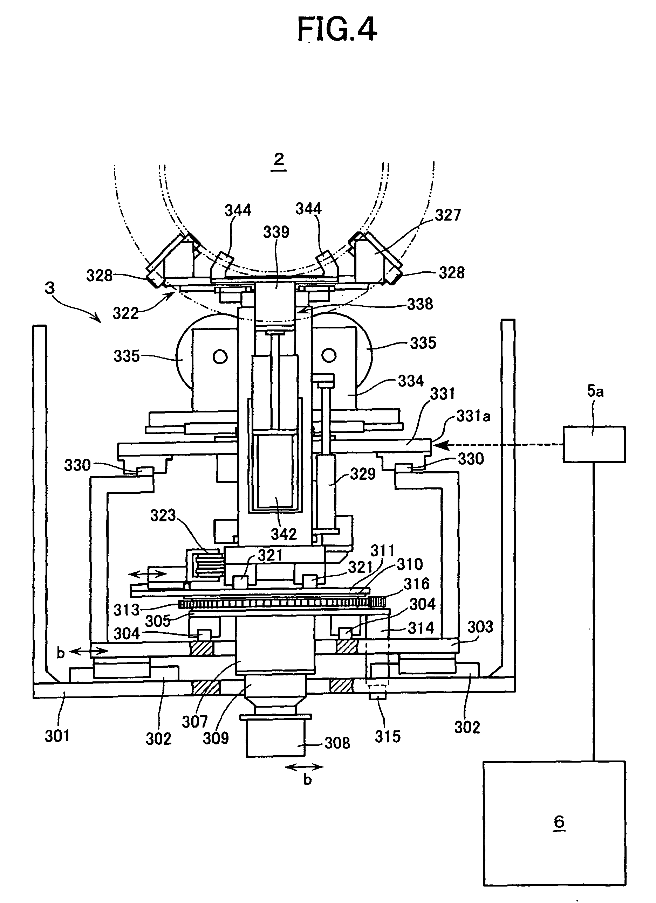

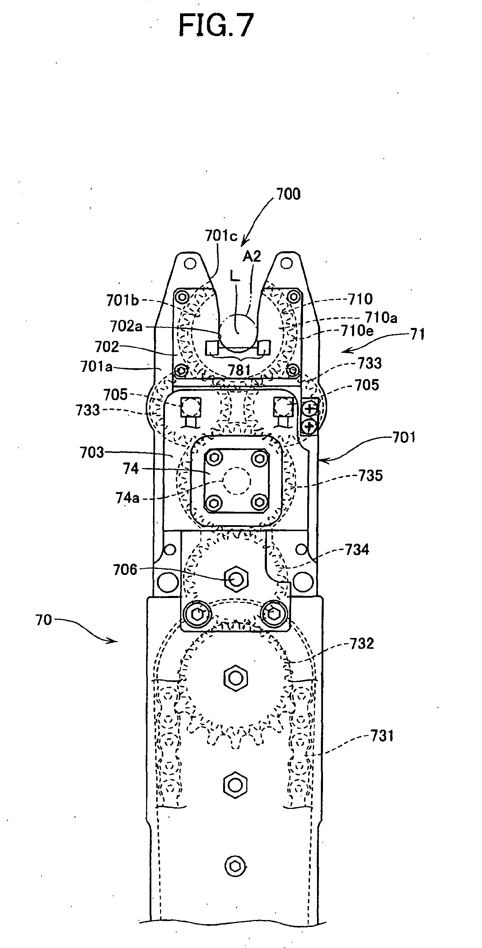

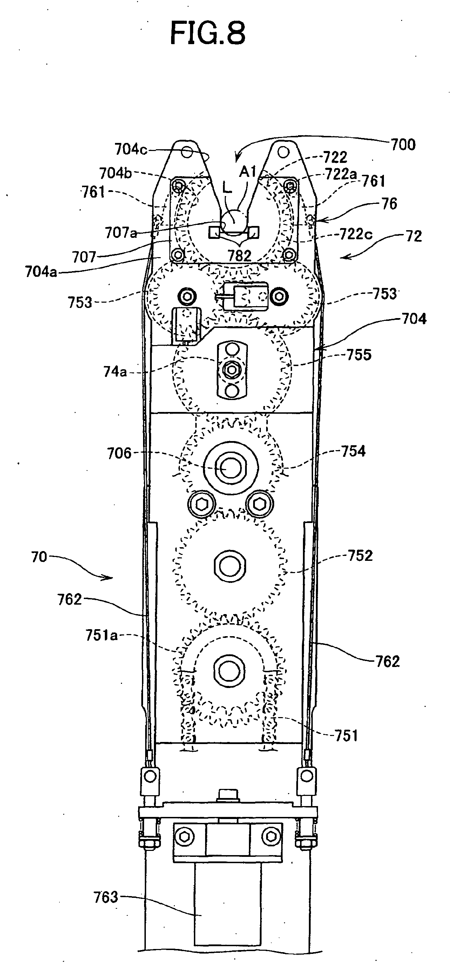

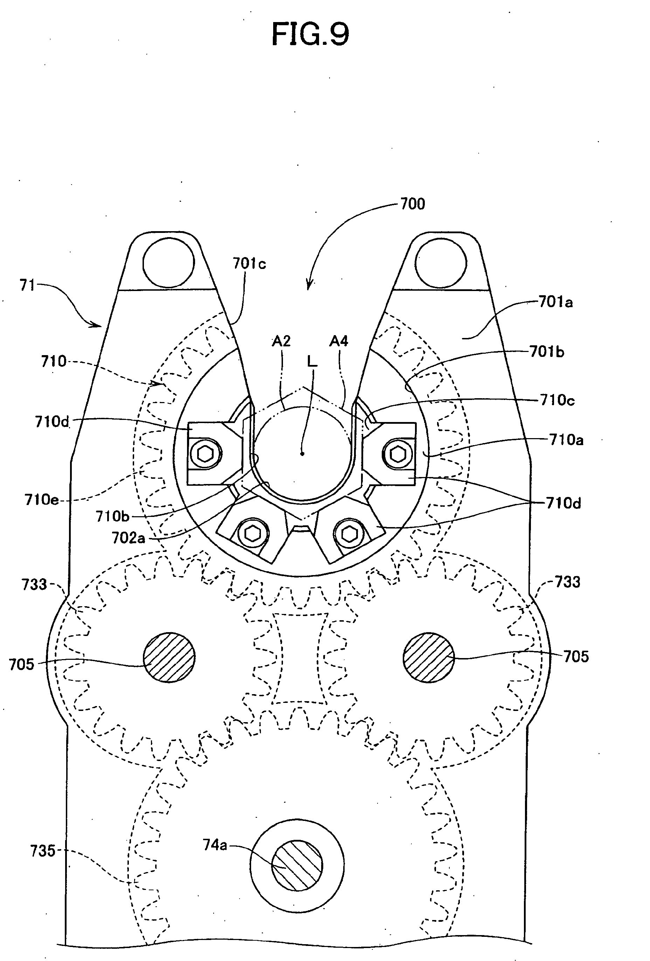

Referring to Fig. 1 to Fig. 14, an embodiment of the present invention will be described below.
Fig. 1 shows an adjustment station 1 on which a vehicle W is carried to adjust a toe angle of wheels 2 mounted on the vehicle W. In the adjustment station 1, as shown in Fig. 2, four tables 3 for seating the wheel 2 of the vehicle W carried are provided corresponding to the number of wheels 2. On the inside in a vehicle-width direction of the two tables 3 for seating front wheels 2 in the four tables T, two tie-rod adjustment apparatus 4 which adjust the toe angles of front wheels 2 by adjusting a length of a tie rod A (see Fig. 14) coupled to the front wheel 2 seated on the two tables 3 are provided corresponding to the two tables 3 for the front wheels.
Referring to Fig. 3 and Fig. 4, the table 3 is supported by a frame body 301 which can be displaced in the vehicle-width direction (arrow a direction) through a guide rail (not shown). A first table 303 which can be displaced in a vehicle-length direction (arrow b direction) through guide rails 302 is placed on the frame body 301. In the frame body 301 and the first table 303, positions are adjusted in accordance with a vehicle width and a vehicle length of the vehicle W which is a measurement object.
A second table 305 which can be displaced in the vehicle-width direction (arrow a direction) through a guide rail 304 is placed on the first table 303. The second table 305 is one which corrects a positional difference when the vehicle W enters the table 3. In the second table 305, a support shaft 306 is supported while the support shaft 306 can be rotated in an arrow c direction through a bearing 307. A rotary encoder 308 for detecting a rotational angle of the support shaft 306 is coupled to a lower end portion of the support shaft 306 through a bracket 309.
A third table 311 which can be rotated in the arrow c direction through a bearing 310 is placed on the second table 305. A gear 313 is provided on an outer periphery of an outer member 312 of the bearing 310 fixed to the third table 311. On the other hand, a motor 315 is fixed to the second table 305 through a reduction gear mechanism 314, and a gear 316 coupled to the reduction gear mechanism 314 is engaged with the gear 313 on the outer periphery of the outer member 312. A brake cylinder 318 is mounted on the second table 305 through a bracket 317, and it is arranged such that the rotation of the third table 311 relative to the second table 305 can be prevented by pressing a brake plate 320 mounted on a cylinder rod 319 of the cylinder 318 against the third table 311.
A pair of wheel clamping mechanisms 322 opposing to each other is placed on the third table 311 through a guide rail 321, and the pair of wheel clamping mechanisms 322 is connected to each other by a pantograph mechanism 323. In one of the pair of wheel clamping mechanisms 322, a drive cylinder 324 which displaces the other wheel clamping mechanism 322 along the guide rail 321 in an arrow e direction relative to the third table 311 is provided, and the pair of wheel clamping mechanisms 322 is configured to be able to be always brought close to and separated from each other in a symmetric manner with respect to the support shaft 306 by action of the drive cylinder 324. The wheel clamping mechanism 322 has a support member 325 folded in a substantial L-shape, a bracket 327 which can be displaced in an arrow d direction along a guide rail 326 provided on a side face extending in a vertical direction of the support member 325, two clamping rollers 328 attached to the bracket 327, and an elevating cylinder 329 of the bracket 327. In this case, the clamping rollers 328 are arranged so as to abut on a tire side face 201 of the wheel 2 in a substantially inverse V-shape.
A wheel hold stage 331 is placed on the first table 303 through a guide rail 330 while the wheel hold stage 331 can be displaced in the arrow a direction. A support shaft 333 is supported by the wheel hold stage 331 through a bearing 332 while the support shaft 333 can be rotated in the arrow c direction, and a wheel support roller 335 is supported onto the support shaft 333 through a bracket 334.

On the other hand, a fourth table 336 is placed on an upper end portion of the support shaft 306, and a toe detection device 338 is provided on the fourth table 336 through a guide rail 337. The toe detection device 338 has a support member 339 folded in a substantial L-shape, a drive cylinder 340 which displaces the support member 339 in an arrow f direction along the guide rail 337, a bracket 343 which can be displaced in the arrow d direction along a guide rail 341 provided on the side face extending in the vertical direction of the support member 339 by an elevating cylinder 342, and two sets of sensing units 344 which are attached to the bracket 343.

In this case, the sensing unit 344 has a fifth table 345 which is attached while the fifth table 345 can be displaced in the arrow d direction relative to the bracket 343, and two rollers consisting of a first roller 346 and a second roller 347 are attached to the fifth table 345. The first roller 346 is arranged to be moved on a rim upper surface portion 203 from a rim flange 202 while rotated, and the second roller 347 is arranged to be moved along the rim flange 202 while rotated.

The wheel hold stage 331 is formed by a rectangular plate body in which a short side is set in the arrow a direction and a long side is set in the arrow b direction, and a hole into which the bearing 332 is inserted is made in the center of the plate body. A laser sensor (optical gauge interferometer) 5a is provided on one side 331a of two side faces parallel to the arrow a direction of the wheel hold stage 331, and the laser sensor 5a is fixed so that a laser beam is vertically incident to the side face 331a. Therefore, one side face 331a of the wheel hold stage 331 is used as an a-direction position detection object surface 331a, and a distance between the laser sensor 5a and the a-direction position detection object surface 331a can be detected. Further, a laser sensor 5b is provided on one side 331b of two side faces parallel to the arrow b direction of the wheel hold stage 331, and the laser sensor 5b is fixed so that the laser beam is vertically incident to the side face 331b. Therefore, one side face 331b of the wheel hold stage 331 is used as a b-direction position detection subject surface 331b, and the distance between the laser sensor 5b and the b-direction position detection subject surface 331b can be detected (table position detection means). The laser sensors 5a and 5b are connected to a control computer 6, and detected distance data between the laser sensor 5a and the a-direction position detection object surface 331a and detected distance data between the laser sensor 5b and the b-direction position detection subject surface 331b are transmitted to the control computer 6.

Relative position data $(X_1, Y_1)$ of the tie rod A with respect to the wheel 2 to which the tie rod A is coupled, size data $(X_2, Y_2)$ of the short side and the long side of the wheel hold stage 331, a-direction position data $X_3$ of the position where the laser sensor 5b is fixed, and b-direction position data $Y_3$ of the position where the laser sensor 5a is fixed are stored in ROM (Read Only Memory) in the control computer 6 (storage means). The relative position data of the tie rod A is stored in accordance with each of the right and left front wheels in each vehicle type. Values of the relative position data $(X_1, Y_1)$ of the tie rod A, the size data $(X_2, Y_2)$ of the wheel hold stage 331, and the position data $X_3$ and the position data $Y_3$ of the laser sensors are based on a predetermined two-dimensional coordinate system $(X, Y)$ which includes an origin O set at a predetermined position in the adjustment station 1, an X-axis parallel to the arrow a direction, and a Y-axis parallel to the arrow b direction (see Fig. 2).

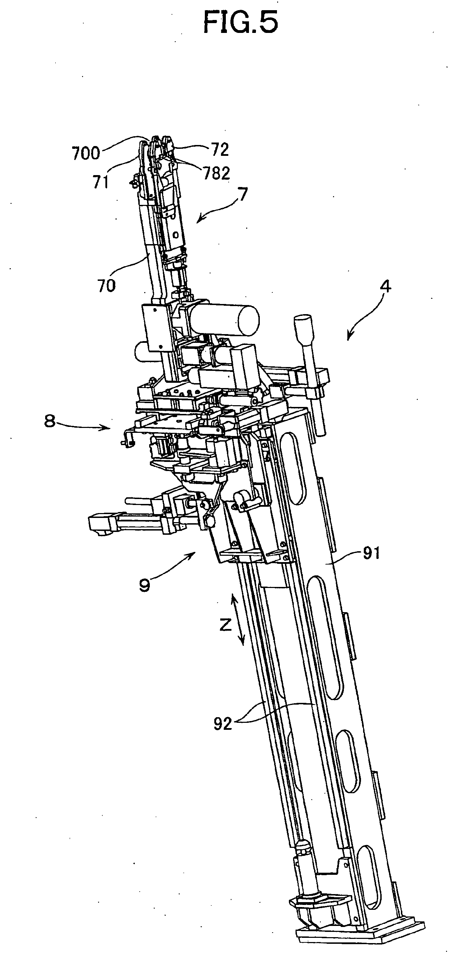

As shown in Fig. 5, the tie-rod adjustment apparatus 4 includes an open-end wrench 7, a support mechanism 8 (a drive mechanism), and a carriage 9 which elevates the support mechanism 8 and the open-end wrench 7 from the lower portion of the automobile W toward the tie rod A. In the open-end wrench 7, an insertion groove 700 into which the tie rod A can be inserted in a radial direction is provided at a front end portion. The support mechanism 8 supports the open-end wrench 7 while the open-end wrench 7 is freely moved in the vehicle-width direction and the vehicle-length direction of the automobile W, freely tilted in the vehicle-width direction, and freely rotated about an axial line in a longitudinal direction of the open-end wrench 7. Fig. 5 shows the tie-rod adjustment apparatus 4 for the right-side front wheel.

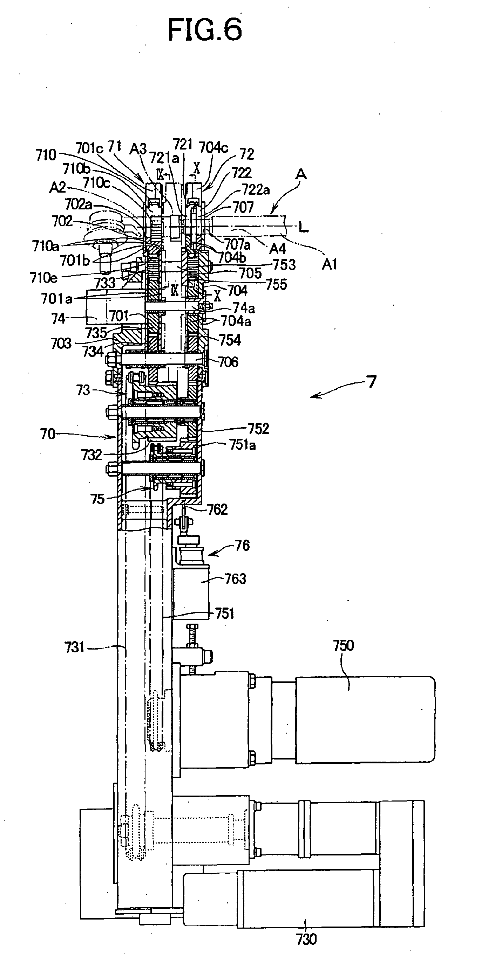

As shown in Fig. 6 to Fig. 10, the open-end wrench 7 is formed by a double-head wrench in which a nut rotating unit 71 for rotating a locknut A3 of the tie rod A and a rod rotating unit 72 engaged with a tool engagement portion A4 of the tie rod A to normally and reversely rotate a rod main body A1 are provided at the front end portion of a wrench main body 70.

The nut rotating unit 71 includes a rotating body 710 journaled in a movable casing 701 which is supported by the wrench main body 70 while freely moved in the axial direction of the tie rod A. The rotating body 710 is sandwiched between side plate portions 701a and 701a located on both sides in the axial direction of the movable casing 701, and the rotating body 710 is freely journaled about an axial line L concentric with a circular hole 701b by forming the circular holes 701b and 701b respectively concentric with the side plate portions 701a and 701a to fit each shaft portion 710a projected toward both sides in the axial direction of the rotating body 710 into each circular hole 701b.

While a notch 701c into which a rod end A2 is inserted is formed at the front end of each side plate portion 701a of the movable casing 701 so that the notch 701c reaches the circular hole 701b, an engagement groove 710b for the rod end A2 which is opened toward an outer peripheral surface is formed in the rotating body 710. When a phase of the engagement groove 710b of the rotating body 710 is set equal to the phase of the notch 701c, the rod end A2 can be inserted in the radial direction into the engagement groove 710b through the notch 701c. A plate-shaped work guide 702 is screwed in an outside face of the side plate portion 701a located outside in the axial line L of the movable casing 701, and a groove 702a into which the rod end A2 can be inserted in the radial direction is also formed in the work guide 702. A bottom portion of the groove 702a is formed in a semicircle concentric with the center of the circular hole 701b which is a rotating axial line of the rotating body 710, and a diameter of the bottom portion of the groove 702a is equal to an outer diameter of the rod end A2.

A socket portion 710c into which the locknut A3 can be inserted in the axial direction is provided in the rotating body 710. A plurality of dies 710d which can be engaged with the locknut A3 are attached in the socket portion 710c so that the locknut A3 can be rotated by the rotation of the rotating body 710. At this point, the rotating body 710 is rotated in both normal and reverse directions by driving means 73. The driving means 73 includes a nut runner 730 which is a drive source mounted on a base end portion of the wrench main body 70, a drive gear 732 which is journaled in a portion near the movable casing 701 of the wrench main body 70 and driven by the nut runner 730 through a chain 731, a pair of driven gears 733 and 733 which is journaled in the movable casing 701 so that the pair of driven gears 733 and 733 is meshed with a teeth portion 710e formed in an outer periphery of the rotating body 710, and first and second intermediate gears 734 and 735 which are journaled in the movable casing 701 so that the drive gear 732 is coupled to the driven gears 733 and 733.

A bracket 703 located outside in the axial direction of the nut rotating unit 71 is attached to the wrench main body 70. Between the bracket 703 and the fixed casing 704 to be mentioned below, a pair of support shafts 705 and 705 for the driven gears 733 and 733 and a support shaft 706 for the first intermediate gear 734 is laterally provided by piercing them through the movable casing 701. Therefore, the movable casing 701 is configured to be supported while freely moved in the axial direction through these support shafts 705, 705, and 706. A cylinder 74 is mounted to the side plate portion 701a located outside in the axial direction of the movable casing 701, and a piston rod 74a of the cylinder 74 is coupled to the fixed casing 704 while commonly used for the support shaft of the second intermediate gear 735. Therefore, the cylinder 74 moves forward and backward the movable casing 701 toward the locknut A3 in the axial directions, and the socket portion 710c can be engaged and disengaged with the locknut A3 by the forward and backward action. The drive gear 732 is formed in a long shape in the axial direction so that the first intermediate gear 734 does not leave the drive gear 732 even when the movable casing 701 is moved in the axial direction.

The rod rotating unit 72 includes a pair of first and second rotating bodies 721 and 722 which is journaled in the fixed casing 704 fixed to the wrench main body 70. As shown in Fig. 6, the rotating bodies 721 and 722 are sandwiched between side plate portions 704a and 704a on both sides in the axial direction of the fixed casing 704 while fitting each other. The rotating bodies 721 and 722 are freely journaled about the axial line L concentric with the rotating axial line of the rotating body 710 of the nut rotating unit 71 by forming circular holes 704b and 704b concentric with the circular hole 701b of the movable casing 701 in the side plate portions 704a and 704a to fit shaft portions 721a and 722a projected toward the outside face in the axial direction of each of the rotating bodies 721 and 722 into each circular hole 704b.

While a notch 704c into which the tool engagement portion A4 of the tie rod A, which is an axle-shaped work, is inserted is formed at the front end of each side plate portion 704a of the fixed casing 704 so that the notch 704c reaches the circular hole 704b, engagement grooves 721b and 722b for the tool engagement portion A4 of the tie rod A which are opened toward the outer peripheral surface are formed in the rotating bodies 721 and 722. When the phases of the engagement grooves 721b and 722b of the rotating bodies 721 and 722 are set equal to the phase of the notch 704c (origin phase), the tool engagement portion A4 can be inserted in the radial direction into the engagement grooves 721b and 722b through the notch 704c. A plate-shaped work guide 707 is screwed in the outside face of the side plate portion 704a located outside in the axial direction of the fixed casing 704, and a groove 707a into which the tool engagement portion A4 can be inserted in the radial direction is also formed in the work guide 707. The bottom portion of the groove 707a is formed in a semicircle concentric with the axial line L, and the diameter of the bottom portion of the groove 707a is equal to a circumscribed circle in a cross section of the tool engagement portion A4.

The first rotating body 721 is rotated in the normal and reverse directions by driving means 75. The driving means 75 includes a servomotor 750 which is a drive source mounted on the base end portion of the wrench main body 70, a drive gear 752 which is journaled in a portion near the fixed casing 704 of the wrench main body 70 and driven by the servomotor 750 through a chain 751 and a gear 751a, a pair of driven gears 753 and 753 which is journaled in the fixed casing 704 through the shafts 705 and 705 so that the pair of driven gears 753 and 753 is meshed with a teeth portion 721c formed in the outer periphery of the first rotating body 721, and first and second intermediate gears 754 and 755 which are journaled in the fixed casing 704 through the support shaft 706 and the piston rod 74a, respectively, so that the drive gear 752 is coupled to the driven gears 753 and 753.

The second rotating body 722 is formed so that it is braked by braking means 76. The braking means 76 includes a pair of brake shoes 761 and 761 which is journaled while freely oscillated through pins 760, respectively, so that they come into contact with and are separated from the outer periphery of the second rotating body 722, and a cylinder 763 which is coupled to both the brake shoes 761 and 761 through wires 762 and 762 and mounted on the wrench main body 70. When the brake shoes 761 and 761 is pulled by the cylinder 763 through the wires 762 and 762, the brake shoes 761 and 761 are pressed against the outer periphery of the second rotating body 722, which allows the second rotating body 722 to be braked.

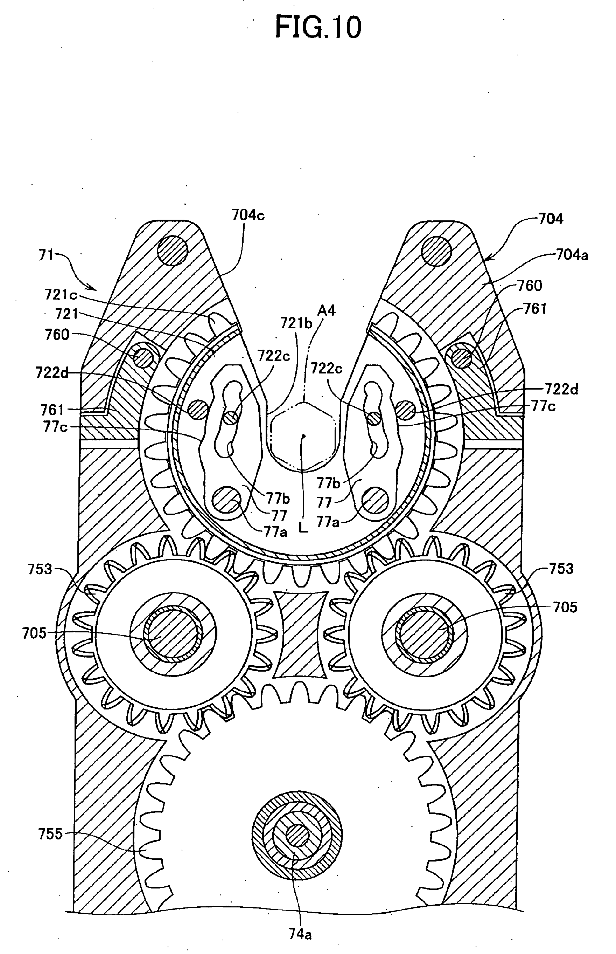

In the first rotating body 721, as shown in Fig. 10, a pair of clamping arms 77 and 77 located on both the sides of the engagement grooves 721b is pivoted about fulcrum pins 77a while freely oscillated in a groove width direction of the engagement grooves 721b. While a pin 722c studded in the second rotating body 722 is engaged with a cam groove 77b formed in each clamping arm 77, a pin 722d studded in the second rotating body 722 is made to abut on an outer periphery 77c of the clamping arm 77, and one of clamping arms 77 and 77 is oscillated toward the inside in the groove-width direction to grip the tool engagement portion A4 by the rotation in the normal and reverse directions of the second rotating body 712 relative to the first rotating body 711.

Seating sensors 781 and 782 are provided on the outer surface of the work guide 702 screwed in the movable casing 701 and the outer surface of the work guide 707 screwed in the fixed casing 704, respectively. The seating sensors 781 and 782 sense whether or not the object is present near both ends of the bottom surface of the insertion groove 700 in the front end portion of the open-end wrench 7, i.e. near the lower end of the groove 702a of the work guide 702 and the lower end of the groove 707a of the work guide 707. The seating sensors 781 and 782 are photoelectric switch type sensors, and the seating sensors 781 and 782 are provided so that they scan near the lower ends of the grooves 702a and 707a. Therefore, when the tie rod is not present on a scanning line, the photoelectric switch is turned off. When the tie rod is present on the scanning line, the photoelectric switch is turned on. The detection data of the on state or off state is transmitted to the control computer 6.

As shown in Fig. 5, the carriage 9 is supported by guide rails 92 while freely oscillated. The guide rails 92 are fixed to a guide frame 91 which is inclined so that it forms predetermined angles between the vertical direction and the vehicle-length direction and between the vertical direction and the vehicle-width direction, respectively, (hereinafter the inclined direction referred to as "Z-axis direction"). The carriage 9 is freely elevated in the Z-axis direction by driving means (not in the figure).

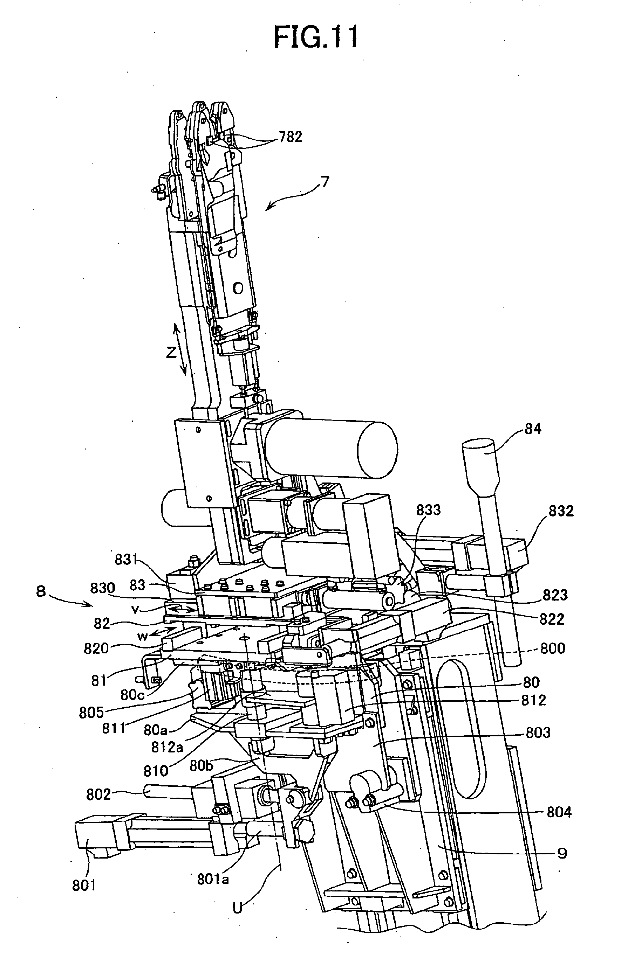

As shown in Fig. 11, the support mechanism 8 includes a tilting member 80 which freely tilts the open-end wrench 7 in the vehicle-width direction on the plane parallel to the Z-axis, a rotating member 81 which is journaled in the tilting member 80 while freely rotated through a shaft 810 in a U-axis direction parallel to the plane, a first sliding member 82 which is supported by the rotating member 81 while freely sliding along guide rails 820 fixed to the rotating member 81 in a W-axis direction orthogonal to the U-axis direction, and a second sliding member 83 which is supported by the first sliding member 82 while freely sliding along guide rails 830 fixed to the first sliding member 82 in a V-axis direction orthogonal to the U-axis and W-axis directions. The open-end wrench 7 is mounted on the second sliding member 83 so that the longitudinal direction of the open-end wrench 7 becomes parallel to the U-axis.

Therefore, while the open-end wrench 7 can be moved in the vehicle-width and vehicle-length directions by the motions of both the first and second sliding members 82 and 83, the open-end wrench 7 can be rotated about the axial line in the longitudinal direction of the open-end wrench 7 by the motion of the rotating member 81. A handle 84 for movement operation of the open-end wrench 7 is attached to the second sliding member 83.

The tilting member 80 is supported while freely sliding along an arc guide rail 800 whose center is the front end portion of the open-end wrench 7, and the guide rail 800 is fixed to the carriage 9. Therefore, the open-end wrench 7 is tilted in the vehicle-width direction on the fulcrum of the front end portion of the open-end wrench 7 by the arc motion along the guide rail 800 of the tilting member 80.

A servo cylinder 801 and a slide guide 802 for the servo cylinder 801 are mounted on the carriage 9. The servo cylinder 801 is coupled to a coupling portion 80b which is attached to an arm 80a projected from the tilting member 80 while the coupling portion 80b is projected downward from the arm 80a. The servo cylinder 801 is a drive source for tilting the tilting member 80 along the guide rail 800, and a piston rod 801a of the servo cylinder 801 is placed so that it is coupled to the coupling portion 80b and appears in the direction parallel to a tilting plane of the tilting member 80 and orthogonal to the U-axis. A tongue section 803 projected downward is attached to the lower end of the tilting member 80, and brakes 804 sandwiching the tong section 803 are attached to the carriage 9. Therefore, the tilting member 80 can be locked at an arbitrary position by the action of the brakes 804. When the brakes 804 are caused to be free, the tilting member 80 can be tilted by drive of the servo cylinder 801. When the brakes 804 are applied, the tilting member 80 can be locked at an arbitrary position. A lock cylinder 805 is also provided in the tilting member 80. The lock cylinder 805 causes a piston rod (not shown) fitted into a hole (not shown) made in the carriage 9 to appear. The tilting member 80 is adapted to be locked at a predetermined neutral position by applying the brakes 804 while the piston rod is projected toward the direction of the carriage 9 and fitted into the hole.

A tongue section 812a projected toward the radial direction is attached to a shaft 810 of the rotating member 81, brakes 812 sandwiching the tong section 812a are attached to the tilting member 80, and the rotating member 81 is locked at an arbitrary position by the action of the brakes 812. A lock cylinder 811 is vertically provided on an arm 80c projected from the tilting member 80. The lock cylinder 811 causes a tapered pin (not shown) fitted into a hole (not shown) made in the rotating member 81 to appear. The rotating member 81 is adapted to be locked at a predetermined neutral position by applying the brakes 812 while the tapered pin is projected upward and fitted into the hole. Even when the tapered pin is sunk downward, a leading end of the tapered pin is tentatively in the hole, so that the rotating member 81 can be freely rotated within the range controlled by the leading end of the tapered pin.

A servo cylinder 822 coupled to a rib formed on the first sliding member 82 and a cylinder 823 having a piston rod (not shown) for a stopper opposing to the rib are mounted on the rotating member 81. Similarly, a cylinder 832 coupled to the rib formed on the second sliding member 83 and a cylinder 833 having a piston rod (not shown) for the stopper opposing to the rib are mounted on the first sliding member 82. The servo cylinders 822 and 832 are drive sources for causing the first sliding member 82 and the second sliding member 83 to slide in the W-axis direction and the V-axis direction, respectively. Brakes (not shown) for locking the first sliding member 82 at an arbitrary position are provided on the rotating member 81. While the piston rod of the cylinder 823 is projected, the servo cylinder 822 is driven so that the piston rod abuts on the rib, and the brakes are applied in this state, which allows the first sliding member 82 to be locked at a predetermined neutral position. In a similar manner, brakes 831 for locking the second sliding member 83 at an arbitrary position are provided on the first sliding member 82. While the piston rod of the cylinder 833 is projected, the servo cylinder 832 is driven so that the piston rod abuts on the rib, and the brakes are applied in this state, which allows the second sliding member 83 to be locked at a predetermined neutral position.

The servo cylinders 801, 822 and 832, and the brakes and lock cylinders associated with the servo cylinders 801, 822, and 832 are connected to and controlled by the control computer 6.

Then, the effect of the embodiment will be described. The case in which the toe angle of the right-side front wheel 2 is adjusted will be described here. Since the case with the left-side front wheel 2 is similar to the case with the right-side front wheel 2, the description will be omitted.

In the case in which the toe angle of the front wheel of the vehicle is adjusted in the embodiment, while the frame body 301 is displaced in the arrow a direction in accordance with the vehicle width and the vehicle length of the vehicle W which is a measurement object, the first table 303 is displaced in the arrow b direction, and then the vehicle is caused to be entered and each wheel 2 is seated on the table 3. In this case, the wheel support roller 335 is deflected through the support shaft 333 in accordance with orientation of the seated wheel 2.

Then, the drive cylinder 340 is driven to bring the wheel clamping devices 322 close to the wheel 2 along the guide rail 321, and the clamping rollers 328 abut on the tire side face 201 of the wheel 2. A height of the clamping roller 328 is previously adjusted by the elevating cylinder 329. In this case, because the clamping roller 328 follows the tire side face 201, the wheel clamping device 322 is rotated about the support shaft 306 through the bearing 310.

When the clamping of the wheel 2 is completed, a distance $X_4$ between the laser sensor 5b and the a-direction position detection subject surface 331b of the wheel hold stage 331 and a distance $Y_4$ between the laser sensor 5a and the b-direction position detection subject surface 331a of the wheel hold stage 331 are detected with the laser sensors 5a and 5b, and the distance data $X_4$ and the distance data $Y_4$ are transmitted to the control computer 6.

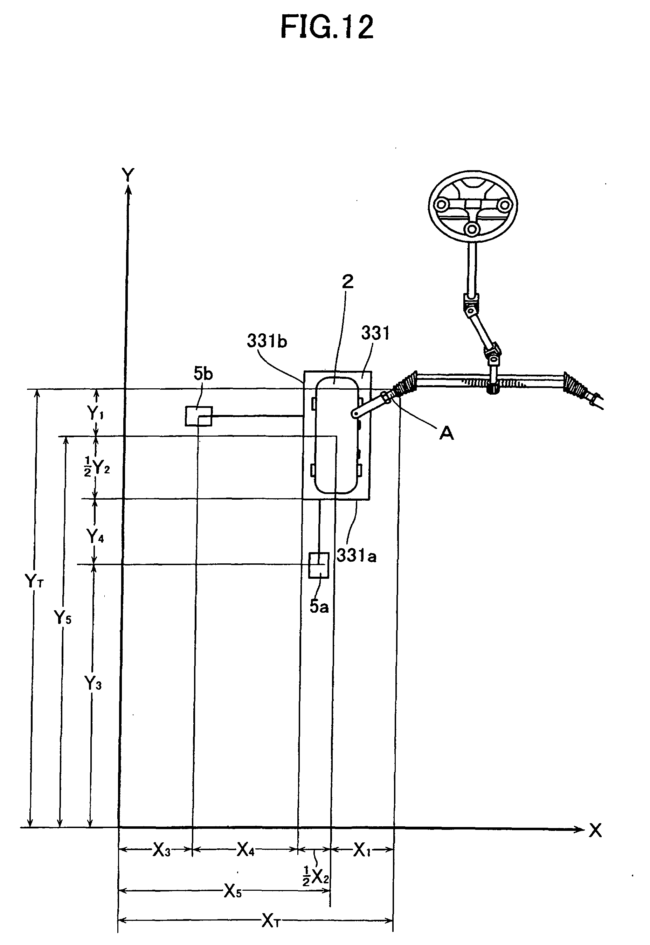

The control computer 6 calculates a horizontal direction position $(X_5, Y_5)$ in the center of the wheel 2 in the predetermined two-dimensional coordinate system $(X, Y)$ on the basis of the received distance data $X_4$ and distance data $Y_4$, the size data $(X_2, Y_2)$ of the wheel hold stage 331 which is stored in ROM, and the position data $X_3$ and position data $Y_3$ of the laser sensors 5a and 5b. In the embodiment, referring to Fig. 12, the horizontal direction position in the center of the wheel 2 is assumed to be equal to the horizontal direction position in the center of the table 3. The horizontal direction position $(X_5, Y_5)$ in the center of the wheel 2 is calculated by the following equations.

$$X_5 = X_3 + X_4 + X_2/2$$

$$Y_5 = Y_3 + Y_4 + Y_2/2$$

Then, the control computer 6 calculates a horizontal direction position $(X_T, Y_T)$ of the tie rod A on the basis of the calculated horizontal direction position $(X_5, Y_5)$ in the center of the wheel 2 and the relative position data $(X_1, Y_1)$ of the tie rod A which is stored in ROM (adjustment member position calculating means). Specifically, the horizontal direction position $(X_T, Y_T)$ of the tie rod A is calculated by the following equations.

$$X_T = X_1 + X_5$$

$$Y_T = Y_1 + Y_5$$

When the horizontal direction position $(X_T, Y_T)$ of the tie rod A is calculated in the above-mentioned way, the carriage 9 of the tie-rod adjustment apparatus 4 is elevated up to a predetermined height in the Z-axis direction by the control of the control computer 6. At this point, the tilting member 80 and the rotating member 81 of the support mechanism 8 are locked at the neutral position.

Then, the rotating member 81 locked at the neutral position by the lock cylinder 811 is released by the control of the control computer 6 to further pull up the open-end wrench 7 in the Z-axis direction, and the servo cylinders 822 and 832 are driven on the bases of the calculated horizontal direction position $(X_T, Y_T)$ of the tie rod A. Thus, the open-end wrench 7 is adjusted in the positions in the vehicle-width and vehicle-length directions by utilizing the motions of the first and second sliding members 82 and 83, and the rod end A2 and the tool engagement portion A4 of the tie rod A are inserted into the notch 701c of the movable casing 701 and the notch 704c of the fixed casing 704 of the open-end wrench 7, respectively. Then, the tool engagement portion A4 and the rod end A2 are guided along the notches 701c and 704c by pulling up the open-end wrench 7, and the tool engagement portion A4 and the rod end A2 are pulled into the engagement grooves 721b and 722b of the rotating bodies 721 and 722 of the rod rotating unit 72 and the engagement groove 710b of the rotating body 710 of the nut rotating unit 71. At this point, the open-end wrench 7 follows the inclination in the vehicle-length direction of the tie rod A and is rotated about the U-axis by the motion of the rotating member 81.

Then, the control computer 6 receives the pieces of detection data of the on state/off state of the seating sensors 781 and 782 located at the front end of the open-end wrench 7, and the control computer 6 decides whether or not the axial line of the tie rod A coincides with the rotating axial line of the first rotating body 721 on the basis of the detection data. Specifically, when both the seating sensor 781 and the seating sensor 782 are in the off state, the control computer 6 decides that the axial line of the tie rod A coincides with the rotating axial line of the open-end wrench 7. When the seating sensor 781 is in the off state and the seating sensor 782 is in the on state, or when the seating sensor 781 is in the on state and the seating sensor 782 is in the off state, the control computer 6 decides that the axial line of the tie rod A does not coincide with the rotating axial line of the open-end wrench 7.

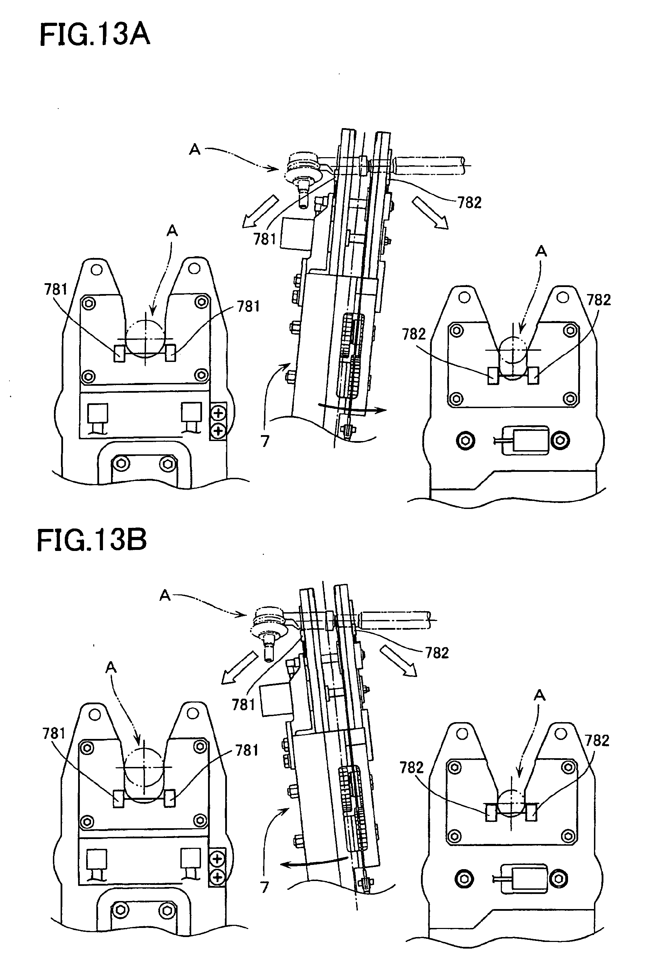

When the control computer 6 decides that the axial line of the tie rod A does not coincide with the rotating axial line of the open-end wrench 7, the tilting member 80 locked at the neutral position by the lock cylinder 805 is released by the control of the control computer 6, the servo cylinder 801 is driven until the seating sensor in the on state becomes the off state. Specifically, when the seating sensor 781 is in the off state and the seating sensor 782 is in the on state [see Fig. 13(a)], the piston rod 801a of the servo cylinder 801 is sunk to incline the open-end wrench 7 toward the left direction of Fig. 11 until the seating sensor 782 becomes the off state. When the seating sensor 781 is in the on state and the seating sensor 782 is in the off state [see Fig. 13(b)], the piston rod 801a of the servo cylinder 801 is projected to incline the open-end wrench 7 toward the right direction of Fig. 11 until the seating sensor 781 becomes the off state. At this point, the lock of the rotating member 81 is released, and the rotating member 81 follows the inclination in the vehicle-length direction of the tie rod A and is rotated about the U-axis when the tilting member 80 is tilted.

When the axial line of the tie rod A coincides with the rotating axial line of the open-end wrench 7 as mentioned above, each of the members 80, 81, 82, and 83 of the support mechanism 8 is locked in this state.

Then, the movable casing 701 is brought close to the fixed casing 704 to cause the socket portion 710c of the rotating body 710 of the nut rotating unit 71 to be engaged with the locknut A3 which is previously released, the locknut A3 is whirl-stopped, and the second rotating body 722 of the rod rotating unit 72 is rotated in a desired direction by the servomotor 750 in this state. Therefore, the clamping arm 77 provided on one side of the first rotating body 721 of the rod rotating unit 72 grips the tool engagement portion A4, the rod main body A1 is rotated in the same direction as the second rotating body 722, and the length of the tie rod A is changed.

When the length of the tie rod A, i.e. the toe of the front wheel 2 is adjusted to a target value, the rotation of the second rotating body 722 is stopped, and the rotating body 710 of the nut rotating unit 71 is rotated by the nut runner 730 to clamp the locknut A3. When the clamping is completed, while the socket portion 710c is caused to leave the locknut A3 by separating the movable casing 701 from the fixed casing 704, the rotating body 711 of the nut rotating unit 71 and both the rotating bodies 721 and 722 of the rod rotating unit 72 are rotated, respectively, until the phases of the engagement grooves 710b and 721b and 722b conform with the phases of the notch 701c of the fixed casing 701 and the notch 704c of the movable casing 704, respectively. Finally, the carriage 9 is lowered by a rod-less cylinder 31 to cause the open-end wrench 7 to leave the tie rod A.

In emergency, the tie-rod adjustment apparatus 4 of the embodiment can also manually be operated by an operator with the handle 84 for movement operation in a manner that the junction between the servo cylinder 801 and the tilting member 80 and the junction between the servo cylinder 832 and the second sliding member 83 are released by unscrewing the attachment bolt.

In the embodiment, assuming that the horizontal direction position in the center of the wheel 2 is equal to the horizontal direction position in the center of the table 3, the horizontal direction position $(X_5, Y_5)$ in the center of the wheel 2 is calculated. When the wheel 2 is seated on the table 3 while the horizontal direction position in the center of the wheel 2 is displaced from the horizontal direction position in the center of the table 3, it is possible to calculate the horizontal direction position $(X_5, Y_5)$ in the center of the wheel 2 in consideration of the amount of displacement. In the embodiment, the horizontal direction position $(X_T, Y_T)$ of the tie rod A is calculated on the basis of the horizontal direction position $(X_5, Y_5)$ in the center of the wheel 2 and the position data $(X_1, Y_1)$ of the tie rod A relative to the wheel 2. However, the present invention is not limited to the above-mentioned calculation. For example, it is possible that the horizontal direction position $(X_T, Y_T)$ of the tie rod A is calculated on the basis of the horizontal direction position $(X_5, Y_5)$ in the center of the table 3 and relative position information on the tie rod A with respect to the table 3 in the state in which the wheel 2 is seated on the table 3.

In the embodiment, the case in which the position of the tie rod A is detected is described. However, the present invention is not limited to the case, and the present invention can be applied to any wheel tilting angle adjustment member which adjusts the tilting angle of the wheel 2.

In the embodiment, the tie-rod adjustment apparatus 4 which adjusts the tie rod A is described. However, the present invention is not limited to the above-mentioned tie-rod adjustment apparatus, and the present invention can be applied to any adjustment apparatus which adjusts an axle-shaped work with an open-end wrench.

The present invention is not limited to the embodiment, and various modifications can be made according to the need.

As can clearly be seen from the above explanation, in the present invention, even when irregularity in an entry position is generated in each vehicle, the horizontal direction position of the table on which the wheel of the entry vehicle is seated is detected by the table position detection means, and the position of the wheel tilting angle adjustment member is calculated on the basis of the detection result, so that the position of the wheel tilting angle adjustment member can be detected without visual observation by the operator.

Further, relative position information on the wheel tilting angle adjustment member with respect to the wheel, which is previously set for each vehicle type, is stored in the storage means, and the position of the wheel tilting angle adjustment member is calculated on the basis of the relative position information and the horizontal direction position of the table. Thus, the position of the wheel tilting angle adjustment member can be detected in accordance with difference in relative position of the wheel tilting angle adjustment member with respect to the wheel of each vehicle type.

In the present invention, when the axle-shaped work is inserted into the insertion groove, the detection means detects whether or not the object, i.e. the axle-shaped work is present on both the ends of the bottom portion of the insertion groove in the open-end wrench. When the axle-shaped work is not present on one of both the ends, the drive mechanism controlling means controls the drive mechanism to change the angle of the rotating axial line of the rotating unit in the open-end wrench with respect to the axial line of the axle-shaped work, and the axle-shaped work is configured to be detected on both the ends. Thus, the state in which the axle-shaped work is detected on both the ends, i.e. the state in which the rotating axial line of the rotating unit of the open-end wrench coincides with the axial line of the axle-shaped work is obtained. Consequently, the rotating axial line of the rotating unit at the front end of the open-end wrench can be caused to coincide accurately with the axial line of the axle-shaped work without visual observation by the operator.

**Claims**

1. An apparatus for detecting a position of a wheel tilting angle adjustment member, comprising: a table on which a wheel mounted on a vehicle is seated through the wheel tilting angle adjustment member for adjusting a tilting angle of the wheel, the table being freely floated in an arbitrary horizontal direction; table position detection means for detecting a position in a horizontal direction of the table; and adjusting member position calculating means for calculating the position of the wheel tilting angle adjustment member coupled to the wheel seated on the table on the basis of the detected position in the horizontal direction of the table.

2. An apparatus for detecting a position of a wheel tilting angle adjustment member according to claim 1, comprising storage means in which relative position information on the wheel tilting angle adjustment member with respect to the wheel is stored, the relative position information being previously set for each vehicle type, wherein the adjusting member position calculating means calculates the position in the horizontal direction of the wheel seated on the table from the position in the horizontal direction of the table which is detected by a table position detection sensor, and the adjusting member position calculating means calculates the position of the wheel tilting angle adjustment member on the basis of the calculated position in the horizontal direction of the wheel and the relative position information stored in the storage means.

3. An apparatus for detecting a position of a wheel tilting angle adjustment member according to claim 1, comprising storage means in which relative position information on the wheel tilting angle adjustment member with respect to the wheel in a state in which the wheel is seated on the table is stored, the relative position information being previously set for each vehicle type, wherein the adjusting member position calculating means calculates the position of the wheel tilting angle adjustment member on the basis of the position in the horizontal direction of the table which is detected by the table position detection means and the relative position information stored in the storage means.

4. An apparatus for detecting a position of a wheel tilting angle adjustment member according to claim 2 or 3, wherein the pieces of relative position information are stored in the storage means corresponding to a plurality of vehicle types respectively, and the adjusting member position calculating means calculates the position of the wheel tilting angle adjustment member on the basis of the relative position information in accordance with the vehicle type on the table.

5. An apparatus for detecting a position of a wheel tilting angle adjustment member according to any one of claims 1 to 4, wherein the wheel tilting angle adjustment member is a tie rod.

6. A method for detecting a position of a wheel tilting angle adjustment member, wherein a position of a wheel mounted on a vehicle is detected through the wheel tilting angle adjustment member which adjusts a tilting angle of the wheel, and the position of the wheel tilting angle adjustment member is calculated on the basis of the detected wheel position and relative position information on the wheel tilting angle adjustment member with respect to the wheel, the relative position information being previously set for each vehicle type.

7. An axle-shaped work adjustment apparatus, comprising: an open-end wrench which has an insertion groove into which an axle-shaped work is inserted in a radial direction at a front end portion, a part of or the whole of the insertion groove being formed by an engagement groove engaged with a tool engagement portion of the axle-shaped work which is formed in a rotating member journaled in the front end portion while freely rotated, the open-end wrench normally and reversely rotating the axle-shaped work by normally and reversely rotating the rotating member while the tool engagement portion is engaged with the engagement groove; detection means for detecting whether or not the objects are present near both ends of a bottom surface of the insertion groove respectively; a drive mechanism which can drive the open-end wrench so that an angle of a rotating axial line of the rotating unit of the open-end wrench is changed with respect to an axial line of the axle-shaped work while the axle-shaped work is inserted in the insertion groove; and drive mechanism controlling means for controlling the drive mechanism to cause the rotating axial line of the rotating unit to coincide with the axial line of the axle-shaped work so that the detection means detects the presence of the axle-shaped work near both the ends of the bottom surface of the insertion groove when the axle-shaped work is inserted into the insertion groove.

8. An axle-shaped work adjustment apparatus according to claim 7, wherein the drive mechanism is configured to be capable of rotating the open-end wrench about the axial line in a longitudinal direction of the open-end wrench and be capable of tilting the open-end wrench in a predetermined direction.

9. An axle-shaped work adjustment apparatus according to claim 7 or 8, wherein the axle-shaped work is a tie rod built in a steering mechanism of an automobile.

10. An axle-shaped work setting method in which the axle-shaped work is set in an open-end wrench which has an insertion groove into which the axle-shaped work is inserted in a radial direction at a front end portion, a part of or the whole of the insertion groove being formed by an engagement groove engaged with a tool engagement portion of the axle-shaped work which is formed in a rotating member journaled in the front end portion while freely rotated, the open-end wrench normally and reversely rotating the axle-shaped work by normally and reversely rotating the rotating member while the tool engagement portion is engaged with the engagement groove, the method comprising: detecting whether or not the tool engagement portion is present near an end portion of a bottom surface of the engagement groove in both the ends of the bottom surface; and driving the open-end wrench on the basis of the detection result to cause the rotating axial line of the rotating unit to coincide with the axial line of the axle-shaped work.

EP 1 519 184 A1

FIG.1

FIG.2

# FIG.3

# FIG.4

# FIG.5

# FIG.6

# FIG.7

# FIG.8

# FIG.9

# FIG.10

# FIG.11

# FIG.12

## FIG.13A

## FIG.13B

# FIG.14

# EP 1 519 184 A1

<table>
<tr><td colspan="2" align="center"><strong>INTERNATIONAL SEARCH REPORT</strong></td><td colspan="2">International application No.<br>PCT/JP03/06199</td></tr>
</table>

| A. | CLASSIFICATION OF SUBJECT MATTER |
|---|---|

Int.Cl$^7$ G01M17/007, B62D17/00, G01B21/26

According to International Patent Classification (IPC) or to both national classification and IPC

| B. | FIELDS SEARCHED |
|---|---|

Minimum documentation searched (classification system followed by classification symbols)

Int.Cl$^7$ G01M17/007, B62D17/00, G01B21/26

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y<br>A | JP 1-182172 A (Mazda Motor Corp.),<br>20 July, 1989 (20.07.89),<br>Full text; all drawings<br>(Family: none) | 1-6,8-9<br>7,10 |
| Y | JP 4-77603 A (Honda Motor Co., Ltd.),<br>11 March, 1992 (11.03.92),<br>Page 2, upper right column, line 18 to page 5,<br>upper right column, line 9; all drawings<br>(Family: none) | 1-6 |
| Y | JP 2000-289640 A (Honda Motor Co., Ltd.),<br>17 October, 2000 (17.10.00),<br>Full text; all drawings<br>(Family: none) | 7-10 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>    08 August, 2003 (08.08.03) | Date of mailing of the international search report<br>    26 August, 2003 (26.08.03) |
| Name and mailing address of the ISA/<br>    Japanese Patent Office | Authorized officer |
| Facsimile No. | Telephone No. |

Form PCT/ISA/210 (second sheet) (July 1998)

**INTERNATIONAL SEARCH REPORT**

| International application No. |
|---|
| PCT/JP03/06199 |

C (Continuation).   DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 141996/1988(Laid-open No. 61779/1990) (Mazda Motor Corp.), 08 May, 1990 (08.05.90), Page 33, line 7 to page 36, line 18; Fig. 15 (Family: none) | 7,10 |
| Y<br>A | JP 4-87886 A  (Honda Motor Co., Ltd.), 19 March, 1992 (19.03.92), Page 2, lower left column, line 2 to page 5, upper left column, line 19; all drawings (Family: none) | 7,10<br>1-6,8-9 |

Form PCT/ISA/210 (continuation of second sheet) (July 1998)